# FASCICULE DE BREVET EUROPEEN

(11) **EP 0 666 447 B1**
(45) Date de publication et mention de la délivrance du brevet: **19.05.1999**
(21) Numéro de dépôt: 95400206.9
(22) Date de dépôt: 01.02.1995
(51) Int. Cl.: F16L 55/28, F16L 55/30, F16L 55/46

(54) **Dispositif porteur pour des modules d'intervention dans un puits tel qu'un tube dissolveur**
Beweglicher Träger zur Aufnahme von Modulen in einem Schacht, wie einem Auflösebecken
Moving carrier for intervention modules in a pit, such as a dissolution pit

(30) Priorité: 03.02.1994 FR 9401213
(43) Date de publication de la demande: 09.08.1995
(73) Titulaire: COMPAGNIE GENERALE DES MATIERES NUCLEAIRES, 78140 Vélizy Villacoublay (FR)
(72) Inventeur: Deschamps, Jean-Pierre, F-50460 Urville-Nacqueville (FR)
(74) Mandataire: Dubois-Chabert, Guy

(56) Documents cités:
- EP-A- 0 085 504
- EP-A- 0 326 156
- DE-A- 4 243 529
- GB-A- 2 184 810
- GB-A- 2 227 805

## Description

### Domaine de l'invention

L'invention concerne les interventions au fond d'un puits tel qu'un tube dissolveur utilisé pour traiter, et en particulier dissoudre, des pastilles de combustible irradié, dans le cadre d'installations nucléaires.

L'invention concerne en particulier le dispositif permettant d'introduire différents modules d'intervention au fond du tube dissolveur.

### Art antérieur et problème posé

Dans le cadre du retraitement ou du traitement d'éléments de combustible irradiés, c'est-à-dire après leur utilisation dans un réacteur nucléaire, les assemblages irradiés sont d'abord sectionnés, puis immergés dans un réactif, qui est généralement de l'acide nitrique chaud, par lequel ils sont dissous. On fait ainsi tomber des fragments de combustible provenant d'une cisaille, contenant de la poudre d'oxyde, dans un tube dissolveur. Celui-ci peut se présenter sous la forme d'un puits, c'est-à-dire d'un grand tube vertical cylindrique ou de section rectangulaire contenant un panier immergé dans une solution d'acide nitrique. Ce tube dissolveur comprend plusieurs canalisations nécessaires à son fonctionnement, en particulier pour l'évacuation des vapeurs et gaz de dissolutions vers un condenseur et des conduites appartenant à un circuit de vidange de la solution de dissolution vers une cuve de stockage. Il peut comprendre également un circuit de bullage-agitation permettant d'homogénéiser la solution.

L'éventuel contrôle et la réparation d'un tel tube dissolveur, et en particulier de sa partie inférieure, ne peuvent se faire qu'au moyen de machines robotisées, l'accès y étant interdit à des personnes humaines, compte tenu du taux d'irradiation de cette zone. Or, dans le cadre d'un éventuel contrôle d'un tel tube dissolveur, il est nécessaire d'utiliser plusieurs appareillages différents. On est ainsi amené à réparer les appuis des paniers, à renforcer le fond de la cuve du tube dissolveur et, par là même, à démonter certains éléments, notamment des tuyaux se trouvant au fond de cette cuve. Il est nécessaire également de contrôler la nature des parois de la cuve et des différentes canalisations qui y débouchent, de les réparer (notamment par soudage), de souder des bandeaux dans le tube dissolveur et d'effectuer d'autres opérations plus ou moins complexes.

Ces besoins n'ont pas été satisfaits jusqu'à présent, de sorte que, lorsqu'une panne ou une défaillance survient au fond d'un tube dissolveur, la solution adoptée est l'arrêt de l'utilisation d'un tel tube.

Le but de l'invention est d'éviter une telle solution d'abandon du tube dissolveur en proposant un dispositif porteur permettant l'introduction de différents appareils permettant le contrôle, l'entretien et la réparation du tube dissolveur, notamment de sa cuve inférieure et des canalisations qui y débouchent.

### Résumé de l'invention

A cet effet, l'objet principal de l'invention est un dispositif porteur pour introduire et commander, un par un, différents appareils ou modules d'intervention au fond d'au moins un puits, tel qu'un tube dissolveur d'axe vertical déterminé. Un tel dispositif comprend :
- un tube à positionner au-dessus du puits ;
- au moins une chaîne de suspension ;
- des moyens de support et moteurs pour porter et entraîner la chaîne de suspension par une première extrémité dite d'entraînement et comprenant notamment une roue porteuse positionnée au-dessus dudit puits dans le tube ;
- une structure porteuse accrochée à une extrémité dite libre de la chaîne de suspension ;
- une chaîne d'alimentation en général ;
- une platine standard de support et de connexion placée à l'extrémité inférieure de la structure porteuse et à laquelle peut être fixé chacun des différents appareils et module ;
- des moyens de commande placés à distance.

Dans sa réalisation principale, la structure porteuse comprend :
- une partie supérieure fixée à la chaîne de suspension ;
- un coulisseau monté mobile verticalement dans la partie supérieure ; et
- deux parties inférieures montées tournantes autour d'un axe vertical central par rapport au coulisseau.

Le coulisseau est doté en particulier d'un volume interne dans lequel peut se stocker et se dévider la chaîne d'alimentation générale, lors des montées et descentes de la structure porteuse.

Cette dernière possède de préférence une partie inférieure entraînée en rotation par l'intermédiaire d'une couronne intérieure engrainant avec au moins un pignon de rotation entraîné par un moteur de rotation.

L'extrémité inférieure de la structure porteuse à laquelle est fixée la platine standard est de préférence un bras articulé pivotant autour d'un axe de pivotement horizontal, lorsque la structure porteuse pend, pour permettre un déplacement quasi horizontal de l'appareil porté.

Dans une réalisation préférentielle de l'invention, une caméra est placée sur la partie inférieure de la structure porteuse, le champ d'exploration de cette caméra étant dirigé vers le bas du puits.

La réalisation préférentielle des moyens de support et moteurs est constituée d'un treuil comprenant :
- la roue porteuse constituée de deux pignons à chaînes ;
- un motoréducteur pas-à-pas entraînant les deux pignons à chaînes ;
- une roue à cliquets solidaire en rotation de pignons à chaînes ;
- un système de remontée de secours à cliquets actionné par un vérin ; et
- un capteur angulaire.

Pour faciliter la descente de la structure porteuse, celle-ci possède de préférence des galets de guidage latéraux fixés aux extrémités de la structure porteuse pour guider sa descente et sa montée dans le puits.

Pour pouvoir être bloquée dans le puits, la structure porteuse possède de préférence à sa périphérie un joint gonflable.

Les moyens de support et moteurs peuvent être complétés d'une cellule de pesée pour contrôler des éventuelles variations de charges au bout de la chaîne de suspension.

### Liste des figures

L'invention et ses différentes caractéristiques seront mieux comprises à la lecture de la description suivante, accompagnée de plusieurs figures représentant respectivement :
- figure 1, l'installation du dispositif selon l'invention au-dessus d'un tube dissolveur ;
- figure 2, une réalisation des moyens de support et moteurs ;
- figure 3, en coupe, la structure porteuse du dispositif selon l'invention ; et
- figure 4, la platine standard de connexion ainsi que l'élément correspondant de l'appareil porté.

### Description détaillée d'une réalisation de l'invention

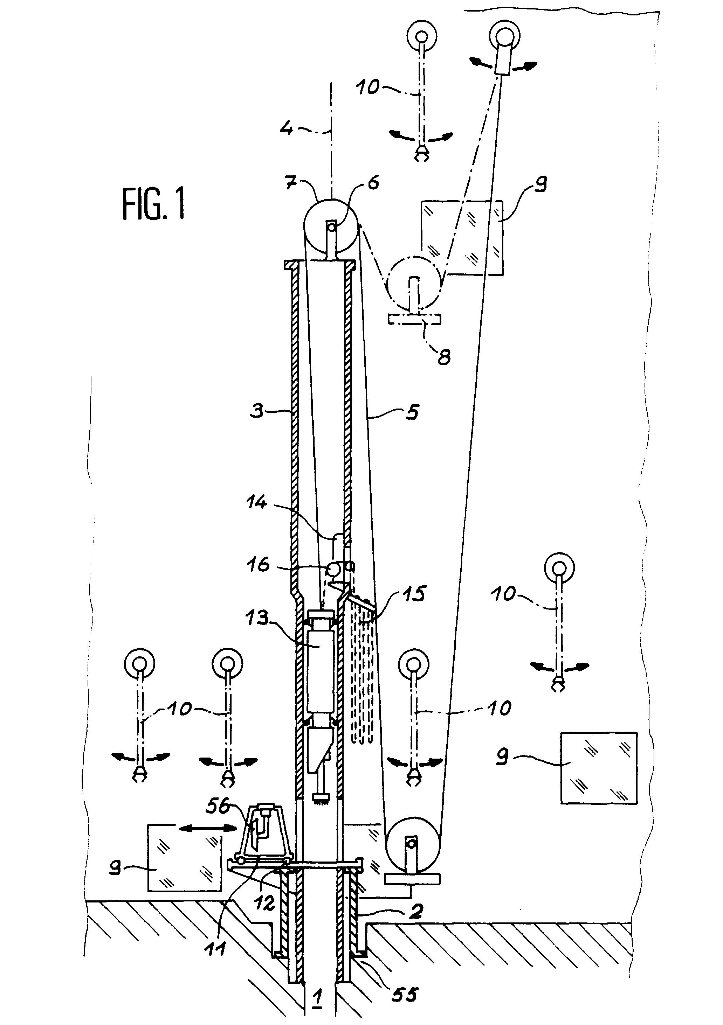

En référence à la figure 1, le dispositif selon l'invention est placé dans la cellule d'un tube dissolveur 1. Cette cellule ne contient que ce dernier et tous les appareillages permettant son utilisation. Les opérateurs et les moyens de commande et de contrôle restent à l'extérieur de cette cellule. Cet isolement a été symbolisé par des hublots 9 placés sur un mur de ladite cellule et des télémanipulateurs 10.

Le tube dissolveur 1, constituant un puits à l'intérieur duquel les interventions sont à effectuer, à été représenté par sa partie supérieure. Les hâchures qui figurent de part et d'autre de ce tube 1 symbolisent la hauteur où est placé le dispositif selon l'invention par rapport au tube dissolveur 1. On note qu'en réalité, le niveau ainsi délimité se trouve plusieurs mètres au-dessus du sol, le tube dissolveur 1 dépassant lui-même au-dessus de ce niveau.

La structure générale du dispositif selon l'invention est constituée en outre d'un ensemble de charpente composé, dans la réalisation décrite, de plusieurs éléments qui peuvent se décomposer en deux parties de tube 2 et 3. La partie inférieure 2 est fixée à la structure de la cellule 55 et sert de prolongateur à la partie supérieure du tube dissolveur 1. Elle est surmontée d'une plaque 12 sur laquelle peut être monté un chariot 11. Ce dernier permet la fixation au dispositif selon l'invention des différents appareils ou modules 56 à introduire à l'intérieur du tube dissolveur 1. Ces modules 56 sont placés sur des chariots de transfert 11. Ainsi, il est possible de stocker à proximité du tube dissolveur 1 et du dispositif selon l'invention plusieurs appareils ou modules différents destinés à effectuer chacun des opérations particulières et différentes au fond du tube dissolveur 1.

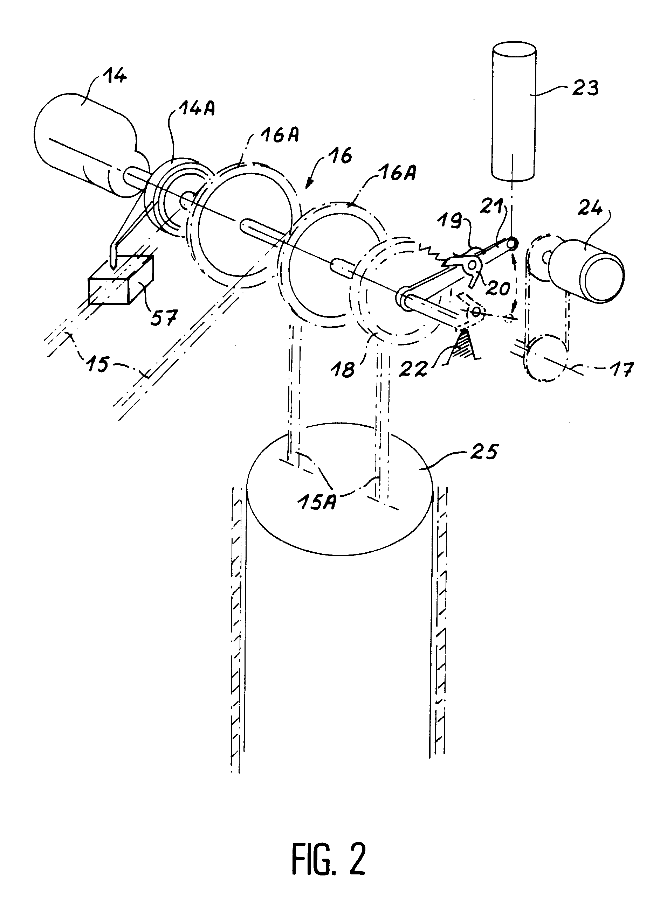

La figure 1 fait également apparaître à l'intérieur de la partie supérieure 3 du tube fixe une structure porteuse 13 suspendue à une chaîne 15. Cette dernière possède des moyens de support et moteurs pour le positionnement et l'entraînement de la structure porteuse 13. En effet, on a représenté un motoréducteur pas-à-pas 14 entraînant une roue porteuse 16 autour de laquelle passe la chaîne 15. Cet ensemble est mieux décrit par la figure 2.

En effet, sur cette dernière, on a schématisé une réalisation possible de moyens moteurs et de support. Un moteur pas-à-pas 14 peut donc entraîner un réducteur 14A entraînant lui-même deux pignons à chaînes 16A constituant la roue porteuse 16. Bien entendu, dans ce cas, c'est une double chaîne 15 qui est engrainée sur ses pignons à chaîne 16A. Une première extrémité 15A des chaînes est fixée à la partie supérieure 25 de la structure porteuse. L'autre extrémité, non représentée, est fixée en dehors du dispositif, les chaînes étant stockées en plis pendulaires, tel que le montre la figure 1.

Sur le même arbre entraînant ces deux pignons à chaînes 16A, se trouve une roue à cliquet 18, c'est-à-dire dont la périphérie est garnie de dents inclinées dans un sens déterminé. Dans ce même sens d'inclinaison peut être orienté un cliquet 20 monté pivotant sur un bras de cliquet 21 monté lui-même pivotant autour de l'axe de rotation 17 des moyens de support et moteurs. Un dispositif de rappel, tel qu'un vérin 23 a tendance à maintenir le bras de cliquet 21 vers le haut, c'est-à-dire à forcer le cliquet 20 dans les dents de la roue à cliquet 18. Un ressort 19 fixé sur le bras de cliquet 21 permet au cliquet 20 de pénétrer entre les dents de la roue à cliquet 18, lorsqu'il se trouve entre deux de ces dents.

De cette manière, l'ensemble ne peut tourner que dans un sens, lorsque ce système à cliquet est enclenché. Ce système peut être débrayé en actionnant le vérin 23 et en descendant le bras 21 jusqu'à une butée 22 faisant pivoter le cliquet 20 pour le désenclencher de la roue à cliquet 18. L'actionnement répétitif du vérin 23 permet de tourner la roue à cliquet 18 et ainsi de remonter la structure porteuse, au cas où le motoréducteur 14, 14A tomberait en panne. Le tout est complété par un capteur angulaire 24 entraîné en rotation par l'arbre 17 de ces moyens supports et moteurs.

On signale qu'une cellule de pesée 57 peut également équiper ces moyens de support et moteurs pour contrôler en permanence la charge de la chaîne 15. Ainsi, si cette cellule 27 est connectée électriquement à un automate, elle peut couper l'alimentation du motoréducteur 14, 14A, lorsque la structure porteuse est coincée dans tube dissolveur, lors de la descente en cas de sous-charge ou lors de la remontée en cas de surchage.

On peut également équiper les maillons des deux chaînes 15 avec des axes débordant par rapport à la largeur de ces chaînes. Ceci permet un arrêt en position prédéterminée en faisant reposer les extrémités d'un ou de plusieurs axes sur des verrous mobiles. Le codage et l'arrêt des chaînes 15 se fait par détection de leur sous-charge par la cellule de pesée 27.

En revenant à la figure 1, la structure porteuse 13 est alimentée en puissance électrique, gaz, eau, air comprimé par une chaîne d'alimentation en général 5. Elle est fixée à la structure porteuse 13 et maintenue à sa disposition au moyen d'une roue de détour 7 montée tournante autour d'un arbre horizontal 6 positionné au-dessus du tube 3 et d'un contrepoids de tension 8.

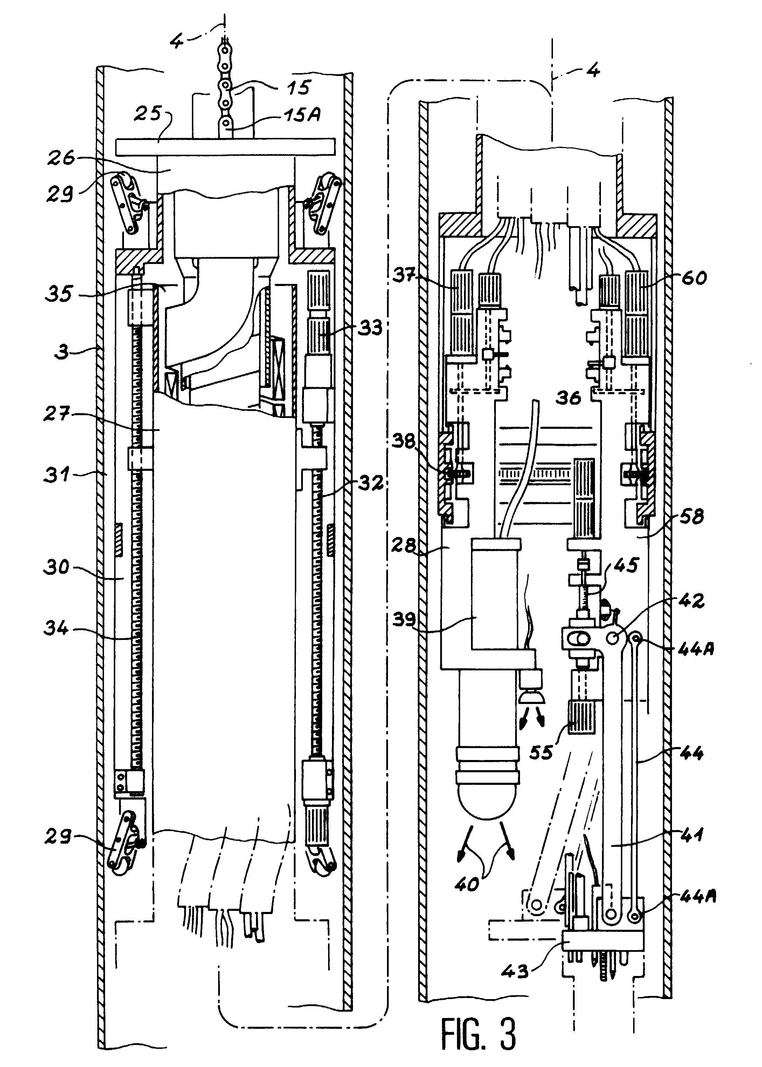

En référence à la figure 3, la structure porteuse comprend principalement trois parties qui sont une partie supérieure 26, un coulisseau 27 et une partie inférieure 28 placée en-dessous du coulisseau 27. La principale fonction de cette structure porteuse est d'immobiliser à différents niveaux d'intervention les modules ou appareils dans le puits qui est de préférence un tube dissolveur. D'autres fonctions secondaires seront énoncées et explicitées plus loin lors de la description des moyens qui s'y rapportent.

La partie supérieure 26 possède une platine de connexion 25 à laquelle est reliée l'extrémité 15A des deux chaînes 15 du treuil.

Cette partie supérieure 26 se prolonge par une structure tubulaire périphérique 30 supportant des galets de guidage 29 destinés à guider la montée et la descente de cette partie supérieure 26 dans le tube 3. Elle porte également au moins un joint gonflable 31 destiné à combler l'intervalle existant entre la paroi interne du tube 3 et la paroi externe de la structure tubulaire 30 pour immobiliser cette partie supérieure 26, à une hauteur déterminée, dans le tube 3.

A l'intérieur de cette structure tubulaire 30 est placé un coulisseau 27, mobile verticalement par rapport à la partie supérieure 26 grâce à des vis à billes 32 fixées sur la structure tubulaire 30 de la partie supérieure 26. Un motoréducteur 33, placé sur cette dernière, permet la rotation des vis à billes 32. On ajoute que le coulisseau 27 est guidé par rapport à la partie supérieure 26 par des barres de guidage 34 fixées sur la partie tubulaire 30 de la partie supérieure 26.

A l'intérieur du coulisseau est ménagé un espace 35 destiné à recevoir la chaîne d'alimentation générale 5 sous la forme d'une spirale, de manière à stocker celle-ci par enroulement lorsque la structure porteuse est en position haute.

La troisième partie, est constituée d'une première partie inférieure 28 qui est montée mobile en rotation par rapport au coulisseau 27 autour de l'axe principal vertical 4 du tube dissolveur. A cet effet, cette première partie inférieure 28 est entraînée en rotation à vitesse constante par l'intermédiaire d'une couronne intérieure 36. Un premier motoréducteur 37 fixé sur la première partie inférieure entraîne en rotation un pignon 38 s'engrenant dans la couronne intérieure 36. Un capteur angulaire, non représenté, peut compléter avantageusement ce montage.

Sur la première partie inférieure 28 est fixée une caméra 39 dont le champ d'exploration est symbolisé par deux flèches 40. Comme on peut le constater, ces flèches 40 sont orientées vers le fond du tube dissolveur pour surveiller les opérations effectuées par les appareils suspendus à la première partie inférieure 28.

Une deuxième partie inférieure 61 complète la troisième partie. Elle est également montée mobile en rotation d'axe vertical autour de la couronne intérieure 36 et entraînée par un deuxième motoréducteur 60. Elle porte un bras articulé 41, monté pivotant autour d'un axe de pivotement horizontal 42 lorsque la structure porteuse pend. Ce bras articulé 41 permet de déplacer autour de cet axe horizontal 42 une platine standard de connexion 43 à laquelle est fixée la partie supérieure d'un des appareils ou modules à descendre dans le tube dissolveur. En fait, c'est un mouvement quasi horizontal qui est transmis à la platine de connexion 43. Un troisième motoréducteur 55 peut à cet effet entraîner un système vis-écrou à billes 45 dont l'écrou entraîne en rotation autour de l'axe horizontale 42 le bras articulé 41. Une bielle 44 complète avantageusement ce dispositif dans le but de maintenir horizontal la platine de connexion 43. Les extrémités 44A de la bielle 44 sont fixées libres en rotation, chacune autour de l'axe horizontal, respectivement, de la deuxième partie inférieure 28 et de la platine de connexion 43.

Le ou les joints gonflables 31 permettent de maintenir en position la structure porteuse à n'importe quel endroit du tube, en particulier dans une position élevée de repos. Le blocage en position intermédiaire, par exemple sur une bride d'appui de panier se trouvant sur la paroi interne du tube dissolveur est également possible, grâce à de tels joints gonflables 31.

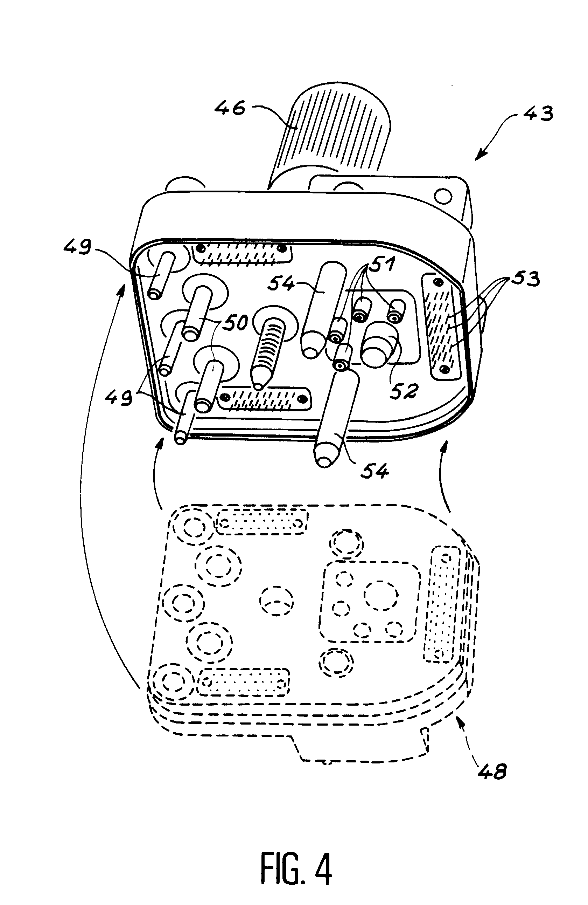

En référence à la figure 4, la platine, référencée 43 sur la figure 3, est détaillée. Cette réalisation comprend principalement un moteur 46 entraînant une vis de solidarisation 47 destinée à bloquer cette platine 43 sur une plaque correspondante 48 montée sur le module ou l'appareil à descendre au fond du tube dissolveur.

Différents éléments de connexion sont prévus sur un tel connecteur. On peut citer la présence par exemple de trois tubes de petit diamètre 49. Deux tubes de plus gros diamètre 50, quatre connecteurs coaxiaux 51, par exemple pour les capteurs ultrasons, un câble de soudage 52 et une grande quantité de fils de connexion électrique 53. Deux pions de centrage 54 sont prévus pour faciliter le positionnement d'une plaque porte-outil 48 sur cette platine de connexion 43.

On comprend qu'un tel dispositif porteur puisse permettre l'utilisation de différents modules ou appareils prévus pour entretenir, démonter, réparer des parties du tube dissolveur. On cite à cet effet, l'utilisation de modules de soudage, genre T. I. G., un module de préhension, un module de découpe par électroérosion, un outillage de récupération d'éléments coupés, un module de mesure d'épaisseur des conduites débouchant dans le tube dissolveur, un module d'exploration, un module ragréage, des modules de ressuage à l'aide d'un liquide pénétrant et d'un liquide révélateur, un outillage spécial de mise en place d'un croisillon et des modules d'intervention pour réparer le fond de la cuve du tube dissolveur.

En référence à la figure 1, il est possible de démonter le dispositif porteur selon l'invention pour le monter sur un autre puits ou tube dissolveur. Ainsi, en maintenant le dispositif selon l'invention à un niveau déterminé symbolisé par le sol hâchuré en bas de la figure 1, il est possible d'intervenir sur plusieurs tubes dissolveurs, référencé 1 sur cette figure, avec un seul dispositif porteur selon l'invention.

On souligne que le concept pendulaire de la structure porteuse 13 permet de faciliter le positionnement de n'importe quel module au fond du tube dissolveur 1.

## Revendications

1. Dispositif porteur pour introduire et commander un par un différents appareils ou modules d'intervention (11) au fond d'au moins un puits, tel qu'un tube dissolveur (1) d'axe vertical déterminé, le dispositif comportant :
- un tube (3) à positionner au-dessus du puits (1) ;
- au moins une chaîne de suspension (15) ;
- des moyens de support et moteurs pour porter et entraîner la chaîne de suspension (15) par une extrémité d'entraînement, et comprenant notamment une roue porteuse (16) positionnée au-dessus dudit puits (1) dans le tube (3) ;
- une structure porteuse (13) accrochée à une extrémité libre (15A) de la chaîne de suspension (15) ;
- une chaîne d'alimentation en général (5) ;
- une platine standard de support et de connexion (43) placée à l'extrémité inférieure de la structure porteuse (13) et à laquelle peut être fixé chacun des différents appareils et module (56) ; et
- des moyens de commande placés à distance.

2. Dispositif porteur selon la revendication 1, caractérisé en ce que la structure porteuse (13) comprend :
- une partie supérieure (26) fixée à la chaîne de suspension (15) ;
- un coulisseau (27) monté mobile verticalement dans la partie supérieure (26) ; et
- deux parties inférieures (28, 61) montées tournantes autour d'un axe vertical central par rapport au coulisseau (27).

3. Dispositif selon la revendication 2, caractérisé en ce que les parties inférieures (28, 61) de la structure porteuse (13) sont entraînées en rotation par l'intermédiaire d'une couronne inférieure (36) engrenant avec au moins deux pignons de rotation (38) entraînés eux-mêmes par deux motoréducteurs (37, 60).

4. Dispositif selon la revendication 2, caractérisé en ce que l'extrémité inférieure de la structure porteuse (13) se trouvant dans la deuxième partie inférieure (61) et à laquelle est fixée la platine standard (43) est un bras articulé (41) pivotant autour d'un axe de pivotement (42) horizontal lorsque la structure porteuse (13) pend, pour permettre un déplacement quasi horizontal de l'appareil ou le module porté (56).

5. Dispositif selon la revendication 2, caractérisé en ce qu'une caméra (39) est placée sur la première partie inférieure (28) de la structure porteuse (13), le champ d'exploration de cette caméra étant dirigée vers le bas du puits (1).

6. Dispositif selon la revendication 1, caractérisé en ce que les moyens de support et moteurs sont constitués d'un treuil comprenant :
- une roue porteuse (16) constituée de deux pignons à chaînes (16A) ;
- un motoréducteur pas-à-pas (14, 14A) entraînant les deux pignons à chaîne (16A) ;
- un système de remontée de secours comprenant une roue à cliquets (18) solidaire en rotation des pignons (16A), un système à cliquet (19, 20, 21) actionné par un vérin (23) ;
- un capteur angulaire (24).

7. Dispositif selon la revendication 1, caractérisé en ce que la structure porteuse (13) a des galets de guidage (29) latéraux fixés sur la partie supérieure (26) de la structure porteuse pour guider la descente et la montée de la structure porteuse (13) cette dernière dans le puits (1).

8. Dispositif selon la revendication 2, caractérisé en ce que le coulisseau (27) a un volume interne (35) dans lequel peut être stockée et dévidée la chaîne d'alimentation générale (5) pendant des montées et descentes de la structure porteuse (13).

9. Dispositif selon la revendication 2, caractérisé en ce que la structure porteuse (13) possède à la périphérie de sa partie supérieure (26) au moins un joint gonflable (31) pour bloquer en position cette structure porteuse (13) dans le puits (1).

10. Dispositif selon la revendication 6, caractérisé en ce que les moyens de support et moteurs comprennent une cellule de pesée (27) reliée à un arbre de rotation (17) des moyens de support et moteurs pour transmettre aux moyens de commande des éventuelles variations de charge ayant lieu au bout de la chaîne de suspension (15).

## Patentansprüche

1. Trägervorrichtung um verschiedene Einsatzgeräte oder module (11) einzeln in den tiefsten Teil wenigstens eines Schachts wie z.B. eines Auflösebeckens (1) einzuführen, umfassend:
- ein über dem Schacht (1) zu positionierendes Rohr (3);
- wenigstens eine Aufhängkette (15);
- Trag- und Antriebseinrichtungen, um die Aufhängkette (15) zu tragen und über ein Antriebsende anzutreiben, die insbesondere ein Trägerrad (16) umfassen, über dem genannten Schacht (1) in dem Rohr (3) angebracht;
- eine Tragstruktur (13), aufgehängt an einem freien Ende (15A) der Aufhängkette (15);
- eine Hauptversorgungskette (5);
- eine Trag- und Anschluß-Standardgrundplatte (43), angeordnet am unteren Ende der Tragstruktur (13), an dem die verschiedenen Geräte und Module (56) befestigt werden können; und
- mit Abstand angeordnete Steuereinrichtungen.

2. Trägervorrichtung nach Anspruch 1, dadurch gekennzeichnet, daß die Tragstruktur (13) umfaßt:
- einen an der Aufhängkette befestigten oberen Teil (26);
- einen Führungsblock (27), in dem oberen Teil (26) vertikal verschiebbar; und
- zwei untere Teile (28, 61), um eine Mittelachse drehbar in bezug auf den Führungsblock (27).

3. Vorrichtung nach Anspruch 2, dadurch gekennzeichnet, daß die unteren Teile (28, 61) der Tragstruktur (13) durch einen unteren Zahnkranz (36) in Drehung versetzt werden, der durch wenigstens zwei Drehritzel (38) angetrieben wird, die ihrerseits von zwei Getriebemotoren (37, 60) angetrieben werden.

4. Vorrichtung nach Anspruch 2, dadurch gekennzeichnet, daß das sich in dem zweiten unteren Teil (61) befindende untere Ende der Tragstruktur (13), an dem die Standardgrundplatte (43) befestigt ist, ein angelenkter Arm (41) ist, schwenkbar um eine horizontale Schwenkachse (42), wenn die Tragstruktur (13) hängt, um eine quasi-horizontale Verschiebung des getragenen Geräts oder Moduls (56) zu ermöglichen.

5. Vorrichtung nach Anspruch 2, dadurch gekennzeichnet, daß eine Kamera (39) auf dem ersten unteren Teil (28) der Tragstruktur (13) angebracht ist, wobei das Überwachungsfeld dieser Kamera auf den unteren Teil des Schachts (1) ausgerichtet ist.

6. Vorrichtung nach Anspruch 1, dadurch gekennzeichnet, daß die Trag- und Antriebseinrichtungen durch einen Flaschenzug gebildet werden, umfassend:
- eine Trägerrad (16), gebildet durch zwei Kettenräder (16A);
- einen Getriebeschrittmotor (14, 14A), der die beiden Kettenräder (16A) antreibt;
- ein Sicherheits-Hebesystem mit einem drehfest mit den beiden Kettenrädern (16A) verbundenen Sperrklinkenrad (18) und einem Sperrklinkenmechanismus, betätigt durch einen Zylinder (23);
- einen Winkelgeber (24).

7. Vorrichtung nach Anspruch 1, dadurch gekennzeichnet, daß die Tragstruktur (13) seitliche Führungsrollen (29) umfaßt, befestigt an dem oberen Teil (26) der Tragstruktur, um die Aufund Abwärtsbewegungen der Tragstuktur (13) in dem Schacht (1) zu führen.

8. Vorrichtung nach Anspruch 2, dadurch gekennzeichnet, daß der Führungsblock (27) ein Innenvolumen (35) hat, in dem die Hauptversorgungskette (5) während der Auf- und Abwärtsbewegungen der Tragstruktur (13) gespeichert bzw. aufgewickelt und abgewickelt werden kann.

9. Vorrichtung nach Anspruch 2, dadurch gekennzeichnet, daß die Tragstruktur (13) an der Peripherie ihres oberen Teils (26) wenigstens eine aufblasbare Dichtung (31) hat, um diese Tragstruktur (31) in dem Schacht (1) in ihrer Position zu blockieren.

10. Vorrichtung nach Anspruch 6, dadurch gekennzeichnet, daß die Trag- und Antriebseinrichtungen eine Druckzelle (57) umfassen, verbunden mit einer Rotationswelle (17) der Trag- und Antriebseinrichtungen, um den Steuereinrichtungen eventuelle Belastungsveränderungen zu übertragen, die am Ende der Aufhängkette (15) stattfinden.

## Claims

1. Carrying device for introducing and controlling, one by one, different intervention modules or equipments (11) at the bottom of at least one shaft, such as a dissolving tube (1) having a given vertical axis, the device comprising:
- a tube (3) to be positioned above the shaft (1),
- at least one chain sling (15),
- support means and motors for carrying and driving the chain sling (15) by a driving end and in particular comprising a carrying wheel (16) positioned above said shaft (1) in the tube (3),
- a carrying structure (13) attached to a free end (15A) of the chain sling (15),
- a general supply chain (5),
- a standard support and connection plate (43) placed at the lower end of the carrying structure (13) and to which can be fixed each of the different equipments and modules (56) and
- remotely positioned control means.

2. Carrying device according to claim 1, characterized in that the carrying structure (13) comprises:
- an upper part (26) fixed to the chain sling (15),
- a slide (27) mounted so as to vertically movable in the upper part (26) and
- two lower parts (28, 61) mounted in rotary manner about a central vertical axis with respect to the slide (27).

3. Device according to claim 2, characterized in that the lower parts (28, 61) of the carrying structure (13) are rotated by means of an internal ring (36) meshing with at least two rotation pinions (38), themselves driven by two geared motors (37, 60).

4. Device according to claim 2, characterized in that the lower end of the carrying structure (13) located in the second lower part (61) and to which is fixed the standard plate (43) is an articulated arm (41) pivoting about a horizontal pivot pin (42) when the carrying structure (13) hangs, in order to permit a quasi-horizontal displacement of the carried module or equipment (56).

5. Device according to claim 2, characterized in that a camera (39) is placed on the first lower part (28) of the carrying structure (13), the scanning field of said camera being directed towards the bottom of the shaft (1).

6. Device according to claim 1, characterized in that the support means and motors are constituted by a winch comprising:
- a carrying wheel (16) constituted by two sprocket wheels (16A),
- a stepwise geared motor (14, 14A) driving the two sprocket wheels (16A),
- an emergency raising system comprising a ratchet wheel (18) integral in rotation with the wheels (16), a ratchet system (19, 20, 21) actuated by a jack (23),
- an angular transducer (24).

7. Device according to claim 1, characterized in that the carrying structure (13) has lateral guide rollers (29) fixed to the upper part (26) of the carrying structure in order to guide the rise and fall of the carrying structure (13) in the shaft (1).

8. Device according to claim 2, characterized in that the slide (27) has an internal volume (35) in which can be stored and unwound the general supply chain (5) during rise and fall operations of the carrying structure (13).

9. Device according to claim 2, characterized in that the carrying structure (13) is provided on the periphery of its upper part (26) with at least one inflatable joint (31) in order to lock said carrying structure (13) in position in the shaft (1).

10. Device according to claim 6, characterized in that the support means and motors comprise a weighing cell (27) connected to a rotation shaft (17) of the support means and motors in order to transmit to the control means any load variations taking place at the end of the chain sling (15).
